# EUROPÄISCHE PATENTANMELDUNG

(11) **EP 3 831 635 A1**
(43) Veröffentlichungstag der Anmeldung: **09.06.2021**
(21) Anmeldenummer: 20194762.9
(22) Anmeldetag: 07.09.2020
(51) Int. Cl.: B60K 17/04, F16H 37/02, F16H 57/028, F16H 47/02

(54) **ANTRIEBSSTRANG FÜR EINE LANDWIRTSCHAFTLICHE ARBEITSMASCHINE**

(30) Priorität: 27.11.2019 DE 102019132121
(71) Anmelder: CLAAS Selbstfahrende Erntemaschinen GmbH, 33428 Harsewinkel (DE)
(72) Erfinder: Richard, Christian, 33428 Harsewinkel (DE)
(74) Vertreter: CLAAS Gruppe

(57) **Zusammenfassung**

Die vorliegende Erfindung betrifft einen Antriebsstrang (7) für eine landwirtschaftliche Arbeitsmaschine (1, 2), wobei der Antriebsstrang (7) einen Antriebsmotor (8) mit einer Abtriebswelle (12) und einem Motorgehäuse (11) sowie ein stufenloses Getriebe (9) mit einem Getriebegehäuse (13), welches von dem Antriebsmotor (8) über eine Eingangswelle (14) angetrieben ist, umfasst, wobei zwischen dem Antriebsmotor (8) und dem stufenloses Getriebe (9) ein Zwischengetriebemodul (10) mit einem separaten Gehäuse (16) angeordnet ist, welches an dem Motorgehäuse (11) und/oder dem Getriebegehäuse (13) angebunden ist, und dass das Zwischengetriebemodul (10) eine Eingangswelle (17) und eine Ausgangswelle (18) aufweist, wobei die Eingangswelle (17) des Zwischengetriebemoduls (10) und die Abtriebswelle (12) des Antriebsmotors (8) und/oder die Ausgangswelle (18) des Zwischengetriebemoduls (10) und die Eingangswelle (14) des stufenloses Getriebes (9) koaxial angeordnet sind.

## Beschreibung

Die vorliegende Erfindung betrifft einen Antriebsstrang für eine landwirtschaftliche Arbeitsmaschine gemäß dem Oberbegriff des Anspruches 1. Weiterhin betrifft die Erfindung eine landwirtschaftliche Arbeitsmaschine, insbesondere einen Traktor.

Aus der DE 10 2011 102 210 A1 ist ein Antriebsstrang für ein Fahrzeug bekannt. Der Antriebsstrang umfasst einen als Verbrennungsmotor ausgeführten Antriebsmotor mit einer Abtriebswelle und einem Motorgehäuse sowie ein Leistungsverzweigungsgetriebe, welches von dem Antriebsmotor über eine Eingangswelle angetrieben ist. Das Leistungsverzweigungsgetriebe weist ein Getriebegehäuse auf, in welchem ein aus einer Hydraulikpumpe und einem Hydraulikmotor bestehender erster Leistungszweig und die Eingangswelle, die über Zahnradelemente verfügt, als zweiter Leistungszweig angeordnet sind. Die Anordnung der Hydraulikpumpe und des Hydraulikmotors in dem Getriebegehäuse dient der bauraumsparenden Bauweise des Leistungsverzweigungsgetriebes. Zudem ermöglicht diese Anordnung die Ausführung der Hydraulikpumpe und des Hydraulikmotors ohne eigene Gehäusekörper, wobei die beweglichen Antriebselemente der Hydraulikpumpe und des Hydraulikmotors außerhalb des Getriebeölsumpfes positioniert sind, um Planschverluste zu vermeiden.

Der Antriebsstrang landwirtschaftlicher Arbeitsmaschinen variiert in Abhängigkeit von den Leistungsklassen der Antriebsmotoren, die für verschiedene Typen von Arbeitsmaschinen zur Anwendung kommen, während das stufenlose Getriebe oftmals für mehrere Typen von Arbeitsmaschinen gleich ist. So können beispielsweise als Traktoren ausgeführte landwirtschaftliche Arbeitsmaschinen unterschiedlichen Typs mit in ihrer abgegebenen Leistung unterschiedlichen Antriebsmotoren ausgeführt sein, während das zum Einsatz kommende stufenlose Getriebe das gleiche ist.

Ausgehend vom vorstehend genannten Stand der Technik liegt der Erfindung die Aufgabe zugrunde, einen Antriebsstrang für eine landwirtschaftliche Arbeitsmaschine bereitzustellen, welcher sich durch eine höhere Flexibilität bei der Anpassung von vom Antriebsmotor auf das stufenlose Getriebe zu übertragenden Drehzahlen und Drehmomenten auszeichnet.

Diese Aufgabe wird erfindungsgemäß durch einen Antriebsstrang mit den Merkmalen des Anspruches 1 gelöst. Vorteilhafte Weiterbildungen sind Gegenstand der Unteransprüche.

Gemäß dem Anspruch 1 wird ein Antriebsstrang für eine landwirtschaftliche Arbeitsmaschine vorgeschlagen, wobei der Antriebsstrang einen Antriebsmotor mit einer Abtriebswelle und einem Motorgehäuse sowie ein stufenloses Getriebe mit einem Getriebegehäuse, welches von dem Antriebsmotor über eine Eingangswelle angetrieben ist, umfasst, wobei zwischen dem Antriebsmotor und dem stufenloses Getriebe ein Zwischengetriebemodul mit einem separaten Gehäuse angeordnet ist, welches an dem Motorgehäuse und/oder dem Getriebegehäuse angebunden ist, und dass das Zwischengetriebemodul eine Eingangswelle und eine Ausgangswelle aufweist, wobei die Eingangswelle des Zwischengetriebemoduls und die Abtriebswelle des Antriebsmotor und/oder die Ausgangswelle des Zwischengetriebemoduls und die Eingangswelle des stufenloses Getriebes koaxial angeordnet sind. Ein derartig aufgebauter Antriebsstrang hat insbesondere die Effekte, dass der Getriebebaukasten, d.h. die Anzahl von verschiedenen Getriebetypen, für die Darstellung unterschiedlicher Leistungsbereiche reduziert werden kann und dass durch die Reduzierung des Getriebebaukastens der Bauraumbedarf für die gesamte Antriebsstrangstruktur verringert werden kann. Das Zwischengetriebemodul ist hinsichtlich seines Gesamtübersetzungsverhältnisses an unterschiedliche Leistungsklassen von Antriebsmotoren und/oder stufenlosen Getrieben anpassbar. Die wahlweise Verbindung des Zwischengetriebemoduls mit dem Motorgehäuse oder mit dem Getriebegehäuse, insbesondere durch Anflanschen mittels einer Schraubverbindung, trägt zu einer besseren Integrationsfähigkeit in den Antriebsstrang bei. So kann der Antriebsmotor sich im Wesentlichen oberhalb eines Fahrzeugrahmens der Arbeitsmaschine erstreckend angeordnet sein, während das stufenlose Getriebe im Wesentlichen zwischen dem Fahrzeugrahmen positioniert ist. Durch das koaxial zur Abtriebswelle und/od er zur Eingangswelle des stufenlosen Getriebes angeordnete Zwischengetriebemodul kann der aus der vertikal versetzten Anordnung von Antriebsmotor und stufenlosem Getriebe resultierende vertikale Versatz zwischen der Abtriebswelle des Antriebsmotors und der Eingangswelle des stufenlosen Getriebes zumindest teilweise ausgeglichen werden. Denkbar ist auch eine Blockbauweise, bei welcher das Gehäuse des Zwischengetriebemoduls mit dem Motorgehäuse und dem Getriebegehäuse verbunden ist.

Bevorzugt kann das Zwischengetriebemodul als ein Pumpenverteilergetriebe ausgeführt sein. Neben der Anpassung von Drehzahl und Drehmoment, welche vom Antriebsmotor auf das stufenlose Getriebe übertragen werden, kann das Zwischengetriebemodul zugleich dem Antrieb von zumindest einer hydraulischen Antriebsvorrichtung dienen.

Vorteilhaft ist es, wenn in den Antriebsstrang ein Torsionsdämpfer zwischen dem Antriebsmotor und dem stufenlosen Getriebe integriert ist. Der Torsionsdämpfer kann als Schwingungsdämpfer hinter dem Antriebsmotor zum Einsatz kommen, wenn in dem Antriebsstrang keine Trenn- und Anfahrkupplung vorgesehen ist. Mit dem Einsatz des Torsionsdämpfers können sowohl Drehmomentspitzen des Antriebsmotors als auch Laufunruhen vom Antriebsstrang oder von gekoppelten Arbeitsgeräten ferngehalten werden. Insbesondere bei einer koaxialen Anordnung von Abtriebswelle des Antriebsmotors und Eingangswelle des Zwischengetriebemoduls sind Torsionsschwingungen vernachlässigbar.

Gemäß einer bevorzugten Weiterbildung können die Eingangswelle und die Ausgangswelle des Zwischengetriebemoduls axial versetzt zueinander angeordnet sein. Hierdurch kann ebenfalls zu einer Bauraumreduzierung beigetragen werden.

Insbesondere kann das Zwischengetriebemodul mit der Abtriebswelle des Antriebsmotors oder der Eingangswelle des stufenlosen Getriebes durch eine Gelenkwelle verbunden sein. Die vertikal versetzte Anordnung der Eingangswelle und der Ausgangswelle des Zwischengetriebemoduls trägt dazu bei, axialen Bauraum für die Gelenkwelle einzusparen. Insbesondere ist der teilweise Ausgleich des vertikalen Versatzes zwischen der Abtriebswelle des Antriebsmotors und der Eingangswelle des stufenlosen Getriebes durch das Zwischengetriebeelement vorteilhaft, um den Beugewinkel der Gelenkwelle gering zu halten, wodurch ein größtmöglicher Wirkungsgrad bei der Drehmomentübertragung erreicht werden kann.

Einem weiteren Gedanken der Erfindung gemäß kann das Zwischengetriebemodul als Stirnradgetriebe ausgeführt sein. Stirnradgetriebe zeichnen sich durch eine einfache Bauweise und hohe Robustheit aus.

Dabei kann das Zwischengetriebemodul eine erste Zahnradstufe mit einem ersten auf der Eingangswelle angeordneten Zahnradelement aufweisen, welches mit zumindest einem auf zumindest einer achsparallelen Welle angeordneten zweiten Zahnradelement kämmt. Mittels der ersten Zahnradstufe kann ein Übersetzungsverhältnis vorgegeben werden, welches an die Größenordnung der zu übertragenden Drehzahl und des zu übertragenden Drehmoments zwischen dem zum Einsatz kommenden Antriebsmotor sowie dem nachgeordneten stufenlosen Getriebe angepasst ist. Dadurch kann berücksichtigt werden, dass der Antriebsmotor ein höheres Drehmoment bereitstellen kann als das stufenlose Getriebe dauerhaft aufnehmen kann. Eine Schädigung des stufenlosen Getriebes kann somit vermieden werden.

Insbesondere kann die zumindest eine Welle eine Abtriebswelle des Zwischengetriebemoduls bilden, an die eine hydraulische Antriebsvorrichtung anschließbar ist. Die hydraulische Antriebsvorrichtung kann insbesondere als Hydraulikpumpe ausgeführt sein. Die Hydraulikpumpe ist dadurch unabhängig vom stufenlosen Getriebe antreibbar. Die Antriebsdrehzahl der Hydraulikpumpe resultiert aus dem Übersetzungsverhältnis der ersten Zahnradstufe. Die zumindest eine Welle kann alternativ die Ausgangswelle des Zwischengetriebemoduls bilden.

Gemäß einer bevorzugten Weiterbildung kann die erste Zahnradstufe ein drittes Zahnradelement aufweisen, welches mit dem ersten Zahnradelement kämmt. Das auf einer weiteren achsparallelen Welle angeordnete dritte Zahnradelement kann dem Antrieb einer weiteren, als hydraulische Antriebsvorrichtung ausgeführten, Hydraulikpumpe dienen.

Weiterhin kann auf der zumindest einen Welle ein erstes Zahnradelement einer zweiten Zahnradstufe angeordnet sein, welches mit einem zweiten Zahnradelement der zweiten Zahnradstufe kämmt, das auf der Ausgangswelle des Zwischengetriebemoduls angeordnet ist.

Vorteilhaft ist es, wenn der Torsionsdämpfer von einer Lagerung des ersten Zahnradelementes der ersten Zahnradstufe des Zwischengetriebemoduls aufgenommen ist. Bevorzugt sind dabei die Abtriebswelle des Antriebsmotors und die Eingangswelle des Zwischengetriebemoduls koaxial angeordnet.

Des Weiteren wird die eingangs gestellte Aufgabe durch eine landwirtschaftliche Arbeitsmaschine mit einem Antriebsstrang nach einem der Ansprüche 1 bis 10 gelöst.

Die vorliegende Erfindung wird nachstehend anhand von in den Zeichnungen dargestellten Ausführungsbeispielen näher erläutert.

Es zeigen:
- Fig. 1: eine schematische Seitenansicht einer landwirtschaftlichen Arbeitsmaschine;
- Fig. 2: eine schematische Darstellung eines Antriebsstrangs der Arbeitsmaschine;
- Fig. 3: eine schematische Darstellung einer weiteren Ausführungsform eines Antriebsstrangs der Arbeitsmaschine.

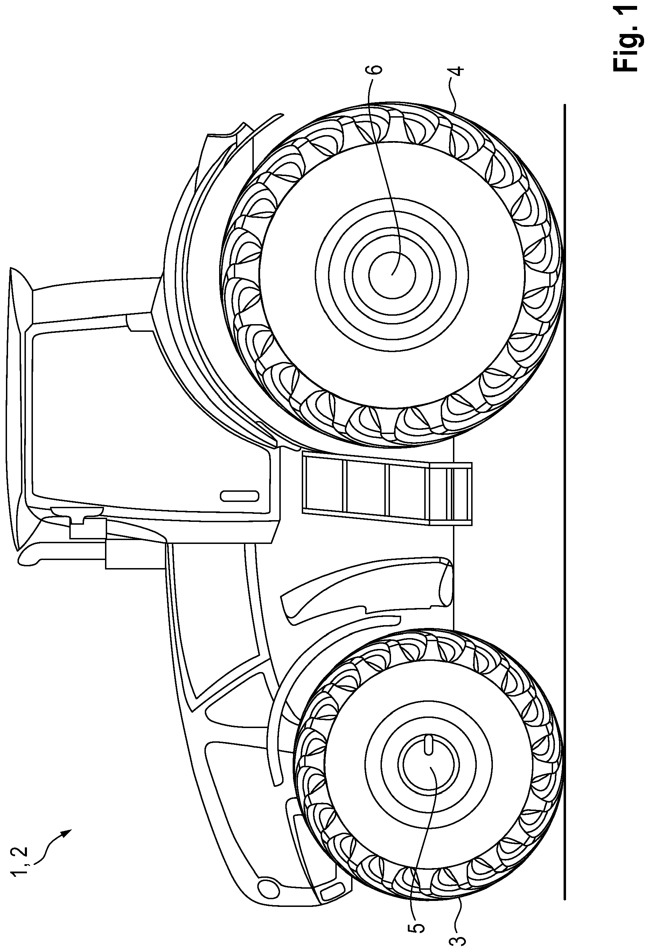

In Fig. 1 ist eine landwirtschaftliche Arbeitsmaschine 1 in Form eines Traktors 2 in schematischer Seitenansicht dargestellt. Es handelt sich bei dem Traktor 1 beispielsweise um einen Standardtraktor, der mit einem Antriebsmotor 8, einem Fahrgetriebe und einem Fahrwerk ausgestattet ist. Von dem Fahrwerk sind in der Ansicht gemäß Fig. 1 jeweils ein Vorderrad 3 und ein Hinterrad 4 dargestellt. Die Vorderräder 3 sind jeweils an einer dazwischenliegenden Vorderachse 5 und die Hinterräder 4 sind jeweils an einer dazwischenliegenden Hinterachse 6 angebaut. Der Traktor 2 kann in dem vorliegenden Ausführungsbeispiel über die Hinterräder 4 antreibbar sein. Alternative Antriebsformen, wie Vorderachs- oder Allradantrieb sind ebenfalls denkbar. Zu diesem Zweck weist der Traktor 1 einen Antriebsstrang 7 auf, mit dem eine Antriebsverbindung von dem in Fig. 1 nicht gezeigten Antriebsmotor 8 über die zumindest über die Hinterachse 6 zu den Hinterrädern 4 herstellbar ist.

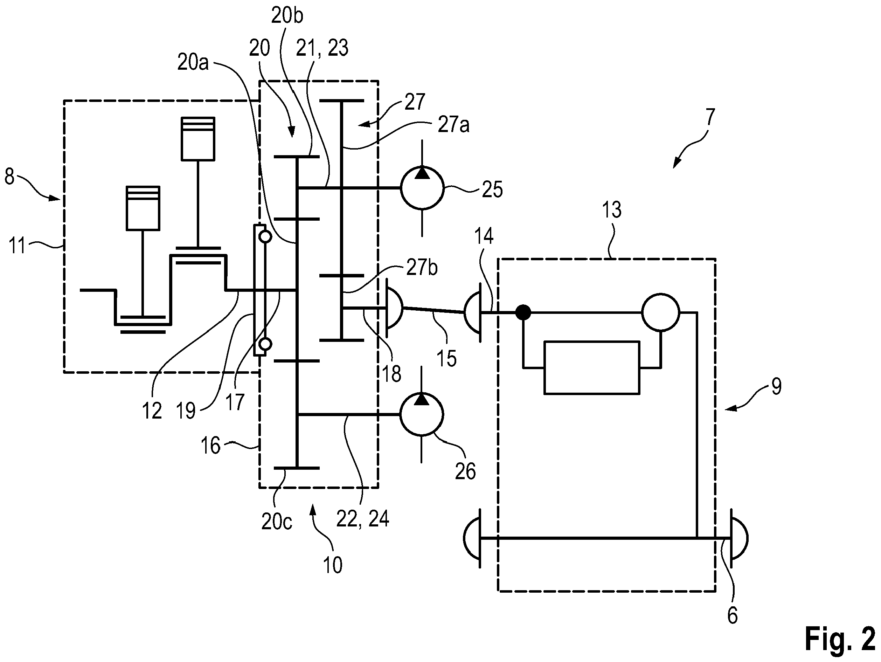

In Fig. 2 ist eine schematische Darstellung des Antriebsstrangs 7 der Arbeitsmaschine 1 gemäß einer ersten Ausführungsform gezeigt. Der Antriebsstrang 7 umfasst den Antriebsmotor 8, der ein Motorgehäuse 11 sowie eine Abtriebswelle 12 aufweist. Der Antriebsmotor 8 ist im dargestellten Ausführungsbeispiel als ein Verbrennungsmotor ausgeführt. Die Abtriebswelle 12 ist als Kurbelwelle ausgebildet. Mit dem Motorgehäuse 11 ist ein separates Gehäuse 16 eines Zwischengetriebemoduls 10 verbunden. Dabei kann das Gehäuse 16 an dem Motorgehäuse 11 angeflanscht sein. Das Zwischengetriebemodul 10 umfasst eine Eingangswelle 17, die koaxial zur Abtriebswelle 12 des Antriebsmotors 8 angeordnet ist, sowie eine Ausgangswelle 18. Die Ausgangswelle 18 des Zwischengetriebemoduls 10 ist mit einer Eingangswelle 14 des als stufenloses Getriebe 9 ausgeführten Fahrgetriebes durch eine Gelenkwelle 15 verbunden. Das stufenlose Getriebe 9 ist in einem Getriebegehäuse 13 angeordnet.

In den Antriebsstrang 7 ist ein Torsionsdämpfer 19 zwischen den Antriebsmotor 8 und das stufenlose Getriebe 9 integriert. Hierzu kann der Torsionsdämpfer 19 zwischen der Abtriebswelle 12 und der Eingangswelle 17 des Zwischengetriebemoduls 10 angeordnet sein. Durch die koaxiale Anordnung von Abtriebswelle 12 und Eingangswelle 17 des Zwischengetriebemoduls 10 sind Torsionsschwingungen in vernachlässigbar. Der Torsionsdämpfer 19 kann von einer Lagerung des ersten Zahnradelementes 20a der ersten Zahnradstufe 20 des Zwischengetriebemoduls 10 aufgenommen sein.

Das Zwischengetriebemodul 10 ist als Stirnradgetriebe ausgeführt. Das Zwischengetriebemodul 10 umfasst im dargestellten Ausführungsbeispiel zwei Zahnradstufen, eine erste Zahnradstufe 20 und eine zweite Zahnradstufe 27. Das Zwischengetriebemodul 10 kann auch mit nur einer Zahnradstufe 20 oder beispielsweise mit einer dritten Zahnradstufe ausgeführt sein.

Auf der Eingangswelle 17 ist ein erstes Zahnradelement 20a der ersten Zahnradstufe 20 angeordnet, welches mit einem zweiten Zahnradelement 20b kämmt, das auf einer zur Eingangswelle 17 achsparallelen Welle 21 angeordnet ist. Weiterhin umfasst die erste Zahnradstufe 20 eine weitere achsparallele Welle 21, auf welcher ein drittes Zahnradelement 20c angeordnet ist, welches ebenfalls mit dem ersten Zahnradelement 20a kämmt. Die jeweilige Welle 21 bzw. Welle 22 bildet eine Abtriebswelle 23 und 24 für als zwei Hydraulikpumpen ausgeführte hydraulische Antriebsvorrichtungen 25 und 26. Die Antriebsdrehzahl der jeweiligen hydraulischen Antriebsvorrichtung 25, 26 lässt sich durch das korrespondierende Übersetzungsverhältnis zwischen dem ersten Zahnradelement 20a und dem zweiten Zahnradelement 20b bzw. dem ersten Zahnradelement 20a und dem dritten Zahnradelement 20c vorgeben.

Die zweite Zahnradstufe 27 umfasst ein ersten Zahnradelement 27a, welches auf der Welle 21 angeordnet ist. Das erste Zahnradelement 27a kämmt mit einem zweiten Zahnradelement 27b, welches auf der Ausgangswelle 18 des Zwischengetriebemoduls 10 angeordnet ist.

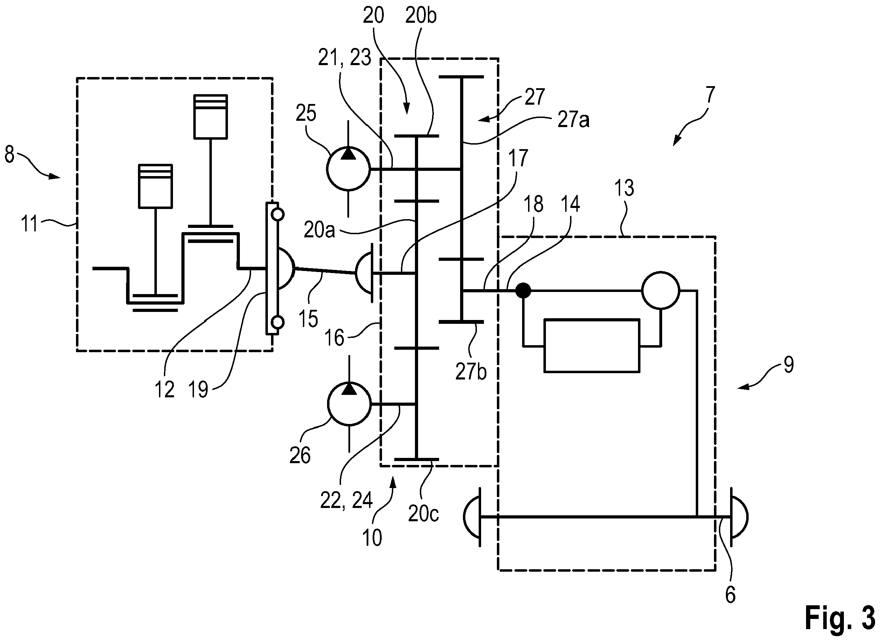

In Fig. 3 ist eine schematische Darstellung einer weiteren Ausführungsform des Antriebsstrangs 7 der Arbeitsmaschine 1 gezeigt. Der Antriebsstrang 7 gemäß Fig. 3 unterscheidet sich vor allem durch die Anordnung des Zwischengetriebemoduls 10. Gemäß dieser dargestellten Ausführungsform ist das Zwischengetriebemodul 10 mit seinem Gehäuse 16 unmittelbar mit dem Getriebegehäuse 13 verbunden. Insbesondere kann das Gehäuse 16 an dem Getriebegehäuse 13 angeflanscht sein. Dabei sind die Ausgangswelle 18 des Zwischengetriebemoduls 10 und die Eingangswelle 14 des stufenlosen Getriebes 9 koaxial angeordnet.

Zwischen der Abtriebswelle 12 und der Eingangswelle 17 des Zwischengetriebemoduls 10 ist eine Gelenkwelle 15 angeordnet. Zwischen der Abtriebswelle 12 des Antriebsmotors 8 und der Gelenkwelle 15 befindet sich der Torsionsdämpfer 19.

Das Zwischengetriebemodul 10 gemäß der dargestellten weiteren Ausführungsform ist im Wesentlichen identisch zu dem in Fig. 2 dargestellten Zwischengetriebemodul 10 aufgebaut. Lediglich die Abtriebswellen 23, 24 für die als zwei Hydraulikpumpen ausgeführten hydraulischen Antriebsvorrichtungen 25, 26 erstrecken sich auf der dem Motorgehäuse 11 zugewandten Seite. Entsprechend ist eine Anordnung der hydraulischen Antriebsvorrichtungen 25, 26 auf der dem Getriebegehäuse 13 abgewandten Seite des Gehäuses 16 vorgesehen. Das Zwischengetriebemodul 10 ist somit als ein Pumpenverteilergetriebe ausgeführt.

Wie aus den schematischen Darstellungen in den Fig. 2 und 3 ersichtlich ist, sind der Antriebsmotor 8 und das stufenlose Getriebe 9 mit einem vertikalen Versatz zueinander an einem Fahrzeugrahmen der Arbeitsmaschine 1 angeordnet, so dass die Abtriebswelle 12 und die Eingangswelle 14 des stufenlosen Getriebes 9 ebenfalls einen vertikalen Versatz aufweisen. Das Zwischengetriebemodul 10 ermöglicht einen teilweisen Ausgleich dieses vertikalen Versatzes zwischen der Abtriebswelle 12 des Antriebsmotors 8 und der Eingangswelle 14 des stufenlosen Getriebes 9, wodurch der Beugewinkel der Gelenkwelle 15 gering gehalten werden kann.

Gemäß einer nicht dargestellten Ausführungsform, kann vorgesehen sein, dass sowohl die Abtriebswelle 12 des Antriebsmotors 8 und die Eingangswelle 17 als auch die Ausgangswelle 18 des Zwischengetriebemoduls 10 und die Eingangswelle des stufenlosen Getriebes 9 koaxial angeordnet sind.

Denkbar ist auch eine Blockbauweise von Antriebsmotor 8, Zwischengetriebemodul 10 und dem stufenlosen Getriebe 9, bei welcher das Gehäuse 16 des Zwischengetriebemoduls 10 mit dem Motorgehäuse 11 und dem Getriebegehäuse 13 verbunden ist.

**Bezugszeichenliste**

| | | | |
|---|---|---|---|
| 1 | Arbeitsmaschine | 27a | Erstes Zahnradelement |
| 2 | Traktor | 27b | Zweites Zahnradelement |
| 3 | Vorderrad | | |
| 4 | Hinterrad | | |
| 5 | Vorderachse | | |
| 6 | Hinterachse | | |
| 7 | Antriebsstrang | | |
| 8 | Antriebsmotor | | |
| 9 | Stufenloses Getriebe | | |
| 10 | Zwischengetriebemodul | | |
| 11 | Motorgehäuse | | |
| 12 | Abtriebswelle | | |
| 13 | Getriebegehäuse | | |
| 14 | Eingangswelle | | |
| 15 | Gelenkwelle | | |
| 16 | Gehäuse | | |
| 17 | Eingangswelle | | |
| 18 | Ausgangswelle | | |
| 19 | Torsionsdämpfer | | |
| 20 | Erste Zahnradstufe | | |
| 20a | Erstes Zahnradelement | | |
| 20b | Zweites Zahnradelement | | |
| 20c | Drittes Zahnradelement | | |
| 21 | Welle | | |
| 22 | Welle | | |
| 23 | Abtriebswelle | | |
| 24 | Abtriebswelle | | |
| 25 | Hydraulische Antriebsvorrichtung | | |
| 26 | Hydraulische Antriebsvorrichtung | | |
| 27 | Zweite Zahnradstufe | | |

## Patentansprüche

1. Antriebsstrang (7) für eine landwirtschaftliche Arbeitsmaschine (1, 2), wobei der Antriebsstrang (7) einen Antriebsmotor (8) mit einer Abtriebswelle (12) und einem Motorgehäuse (11) sowie ein stufenloses Getriebe (9) mit einem Getriebegehäuse (13), welches von dem Antriebsmotor (8) über eine Eingangswelle (14) angetrieben ist, umfasst, **dadurch gekennzeichnet, dass** zwischen dem Antriebsmotor (8) und dem stufenloses Getriebe (9) ein Zwischengetriebemodul (10) mit einem separaten Gehäuse (16) angeordnet ist, welches an dem Motorgehäuse (11) und/oder dem Getriebegehäuse (13) angebunden ist, und dass das Zwischengetriebemodul (10) eine Eingangswelle (17) und eine Ausgangswelle (18) aufweist, wobei die Eingangswelle (17) des Zwischengetriebemoduls (10) und die Abtriebswelle (12) des Antriebsmotors (8) und/oder die Ausgangswelle (18) des Zwischengetriebemoduls (10) und die Eingangswelle (14) des stufenloses Getriebes (9) koaxial angeordnet sind.

2. Antriebsstrang (7) nach Anspruch 1, **dadurch gekennzeichnet, dass** das Zwischengetriebemodul (10) als ein Pumpenverteilergetriebe ausgeführt ist.

3. Antriebsstrang (7) nach Anspruch 1 oder 2, **dadurch gekennzeichnet, dass** in den Antriebsstrang (7) ein Torsionsdämpfer (19) zwischen dem Antriebsmotor (8) und dem stufenlosen Getriebe (9) integriert ist.

4. Antriebsstrang (7) nach einem der vorangehenden Ansprüche, **dadurch gekennzeichnet, dass** die Eingangswelle (17) und die Ausgangswelle (18) des Zwischengetriebemoduls (10) axial versetzt zueinander angeordnet sind.

5. Antriebsstrang (7) nach einem der vorangehenden Ansprüche, **dadurch gekennzeichnet, dass** das Zwischengetriebemodul (10) mit der Antriebswelle (12) des Antriebsmotors (8) oder der Eingangswelle (14) des stufenlosen Getriebes (9) durch eine Gelenkwelle (15) verbunden ist.

6. Antriebsstrang (7) nach einem der vorangehenden Ansprüche, **dadurch gekennzeichnet, dass** das Zwischengetriebemodul (10) als Stirnradgetriebe ausgeführt ist.

7. Antriebsstrang (7) nach einem der vorangehenden Ansprüche, **dadurch gekennzeichnet, dass** das Zwischengetriebemodul (10) eine erste Zahnradstufe (20) mit einem ersten auf der Eingangswelle (17) angeordneten Zahnradelement (20a) aufweist, welches mit zumindest einem auf zumindest einer achsparallelen Welle (21, 22) angeordneten zweiten Zahnradelement (20b, 20c) kämmt.

8. Antriebsstrang (7) nach Anspruch 7, **dadurch gekennzeichnet, dass** die zumindest eine Welle (21, 22) eine Abtriebswelle (23, 24) des Zwischengetriebemoduls (10) bildet, an der eine hydraulische Antriebsvorrichtung (25, 26) anschließbar ist.

9. Antriebsstrang (7) nach Anspruch 7 oder 8, **dadurch gekennzeichnet, dass** auf der zumindest einen Welle (21) ein erstes Zahnradelement (27a) einer zweiten Zahnradstufe (27) angeordnet ist, welches mit einem zweiten Zahnradelement (27b) der zweiten Zahnradstufe (27) kämmt, das auf der Ausgangswelle (18) des Zwischengetriebemoduls (10) angeordnet ist.

10. Antriebsstrang (7) nach einem der Ansprüche 7 bis 9, **dadurch gekennzeichnet, dass** der Torsionsdämpfer (19) von einer Lagerung des ersten Zahnradelementes (20a) der ersten Zahnradstufe (20) des Zwischengetriebemoduls (10) aufgenommen ist.

11. Landwirtschaftliche Arbeitsmaschine (1, 2) mit einem Antriebsstrang (7) nach einem der Ansprüche 1 bis 10.
